# EUROPEAN PATENT APPLICATION

(11) **EP 4 667 801 A1**
(43) Date of publication of application: **24.12.2025**
(21) Application number: 23922928.9
(22) Date of filing: 13.12.2023
(51) Int. Cl.: F16L 37/12, F16L 21/08

(54) **PIPE FITTING**

(30) Priority: 16.02.2023 JP 2023022154
(71) Applicant: SMC Corporation, Tokyo 104-0031 (JP)
(72) Inventor: SAITO, Shuichi, 300-2493 Ibaraki (JP); YAMANASHI, Masanobu, 300-2493 Ibaraki (JP); SUZUKI, Takahiro, 300-2493 Ibaraki (JP); TAKANASHI, Akihito, 300-2493 Ibaraki (JP)
(74) Representative: Keil & Schaafhausen Patentanwälte PartGmbB
(86) International application number: PCT/JP2023/044611
(87) International publication number: WO 2024/171595

(57) **Abstract**

A chuck (12, 12A) that is stored in a sleeve (44, 44A) has an engagement piece (18, 18A) formed with a claw part (18c, 74) capable of being locked to an outer surface of a tube (62). The sleeve (44, 44A) is rotatable between a first rotation position and a second rotation position relative to a body (24, 24A). A pipe fitting (10, 10A) comprises: a cam part (46, 46A) that guides the engagement piece (18, 18A) along with the rotation of the sleeve (44, 44A), in such a way that the distance from the engagement piece (18, 18A) to the axial center of the chuck (12, 12A) changes; and an unlock mechanism for removing restriction on the rotation of the sleeve (44, 44A) in accordance with the insertion of the tube (62) to a predetermined position.

## Description

### TECHNICAL FIELD

The present invention relates to a fitting (pipe fitting) for connecting a tube through which a fluid flows, to another tube, a device, or the like.

### BACKGROUND ART

Conventionally, there is known a fitting having a locking function of preventing a tube from coming off in a state where the tube is inserted to a predetermined position. For example, JP 2001-349488 A discloses a fitting having a locking function.

### SUMMARY OF THE INVENTION

A conventional fitting having a locking function includes a lock ring provided with a restricting piece (claw) that bites into a tube in order to prevent the tube from being pulled out. When the tube is connected to the fitting, the tube is inserted so as to push away the restricting piece of the lock ring. At this time, the outer circumferential surface of the tube may be damaged by the restricting piece.

The present invention has the object of solving the aforementioned problem.

According to an aspect of the present disclosure, there is provided a fitting to which a tube is to be connected, the fitting comprising a chuck, a body, and a sleeve, wherein the chuck accommodated in the sleeve includes an engaging piece provided with a claw portion configured to be locked to an outer surface of the tube, the sleeve disposed outside the chuck is rotatable relative to the body between a first rotational position and a second rotational position, the fitting comprises: a guide mechanism configured to guide the engaging piece in a manner so that a distance from the engaging piece to an axis of the chuck changes in accordance with rotation of the sleeve; a rotation locking mechanism configured to restrict the rotation of the sleeve at the first rotational position and the second rotational position; and a lock release mechanism configured to, due to the tube being inserted to a predetermined position, release restriction on the rotation of the sleeve located at the first rotational position, and the claw portion does not contact the tube when the sleeve is located at the first rotational position, and the claw portion is locked to the outer surface of the tube when the sleeve is located at the second rotational position.

In the fitting according to the above aspect, since the tube is inserted in a state where the sleeve is located at the first rotational position, the claw portion of the engaging piece does not contact the tube and does not damage the tube when the tube is inserted.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF DRAWINGS

[FIG. 1] FIG. 1 is a front view of a fitting according to a first embodiment;
[FIG. 2] FIG. 2 is a plan view of the fitting of FIG. 1;
[FIG. 3] FIG. 3 is an exploded view of parts of the fitting of FIG. 1;
[FIG. 4] FIG. 4 is a cross-sectional view of the fitting of FIG. 1 taken along a plane along line IV-IV of FIG. 2;
[FIG. 5] FIG. 5 is a cross-sectional view of the fitting of FIG. 1 taken along a plane along line V-V;
[FIG. 6] FIG. 6 is a cross-sectional view taken along the same plane as in FIG. 5, in the case where a tube is inserted into the fitting of FIG. 1 and a sleeve is rotated to a predetermined position;
[FIG. 7] FIG. 7 is a cross-sectional view taken along a plane along line VII-VII of FIG. 2, in the case where the tube is inserted into the fitting of FIG. 1;
[FIG. 8] FIG. 8 is a cross-sectional view taken along the same plane as in FIG. 4, in the case where the tube is inserted into the fitting of FIG. 1;
[FIG. 9] FIG. 9 is a cross-sectional view of the fitting of FIG. 1 taken along a plane along line IX-IX;
[FIG. 10] FIG. 10 is a cross-sectional view taken along the same plane as in FIG. 9, in the case where the tube is inserted into the fitting of FIG. 1;
[FIG. 11] FIG. 11 is a cross-sectional view taken along the same plane as in FIG. 9, in the case where the tube is inserted into the fitting of FIG. 1 and the sleeve is rotated to the predetermined position;
[FIG. 12] FIG. 12 is an external view of the fitting of FIG. 1;
[FIG. 13] FIG. 13A is a perspective view of a fitting according to a second embodiment, and FIG. 13B is a perspective view of the fitting of FIG. 13A with a tube inserted thereinto;
[FIG. 14] FIG. 14 is an exploded view of parts of the fitting of FIG. 13A;
[FIG. 15] FIG. 15A is a perspective view of a chuck of FIG. 14, and FIG. 15B is a plan view of an engaging piece of FIG. 15A;
[FIG. 16] FIG. 16 is a cross-sectional view of the fitting of FIG. 13A taken along a plane along line XVI-XVI;
[FIG. 17] FIG. 17 is a cross-sectional view of the fitting of FIG. 13A taken along a plane along line XVII-XVII;
[FIG. 18] FIG. 18A is a cross-sectional view of the fitting of FIG. 13A taken along a plane along line XVIIIA-XVIIIA of FIG. 16, and FIG. 18B is a cross-sectional view of the fitting of FIG. 13A taken along a plane along line XVIIIB-XVIIIB of FIG. 16;
[FIG. 19] FIG. 19A is a cross-sectional view showing displacement of a spacer due to insertion of the tube in the same cross section as FIG. 17, and FIG. 19B is an explanatory view of an operation of rotating a sleeve of the fitting of FIG. 13A; and
[FIG. 20] FIG. 20A is a perspective view showing engagement between a rotation locking protrusion and a second fixing groove in the fitting of FIG. 13A, and FIG. 20B is a cross-sectional view showing the position of the engaging piece at a second rotational position in the same cross section as FIG. 18A.

### DETAILED DESCRIPTION OF THE INVENTION

### (First Embodiment)

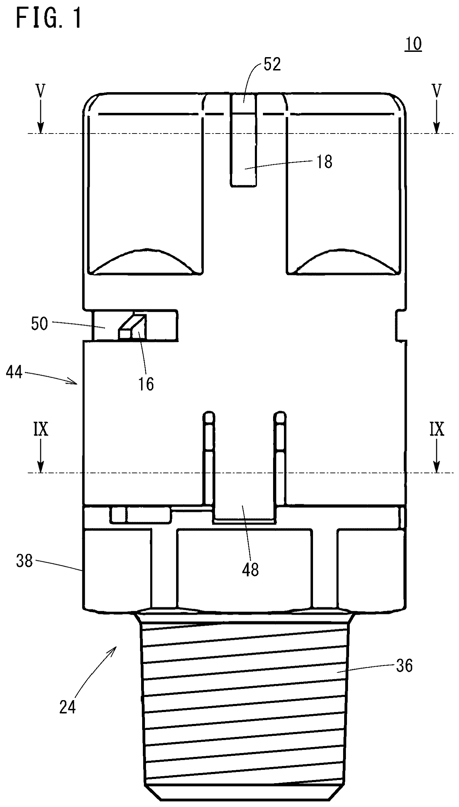

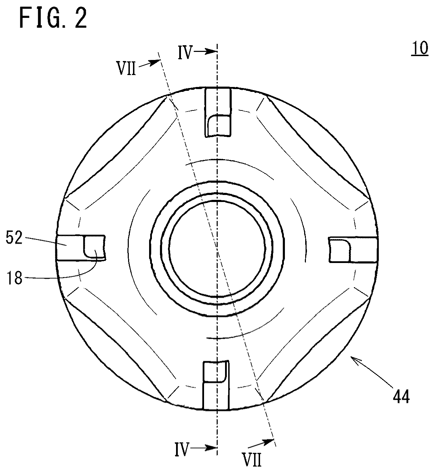

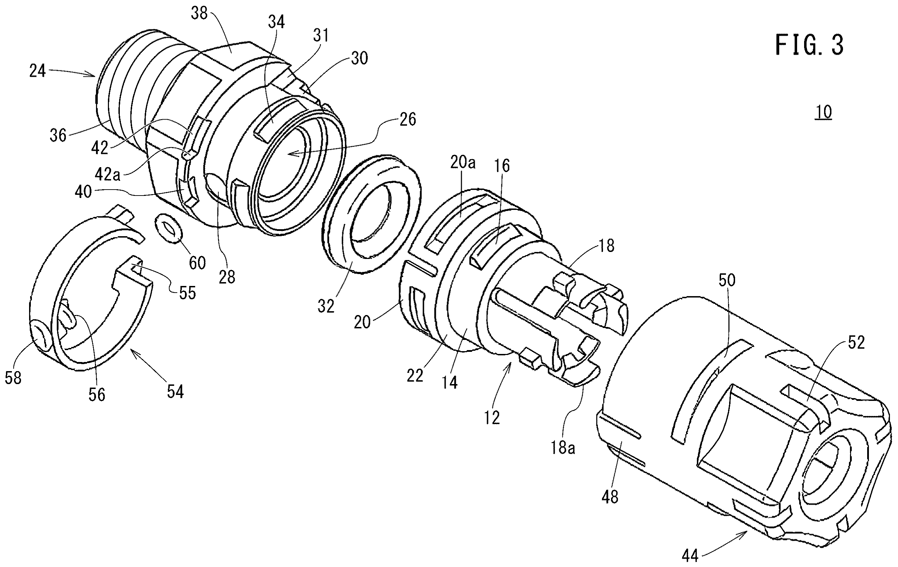

As shown in FIGS. 1 to 4, a fitting 10 according to the present embodiment includes a chuck 12, a body 24, a sleeve 44, and a C-ring 54. These components are all made of a resin material such as PPS. When the fitting 10 is used, a tube 62 (pipe) made of resin, for example, is connected to the fitting 10. In the following description, the terms "axis X of the chuck 12", "axis X of a main body portion 14", "axis X of the body 24", and "axis X of the sleeve 44" are used, but these axes X coincide with each other, and thus all of them are denoted by the common reference sign "X".

The chuck 12 includes a cylindrical main body portion 14, a plurality of engaging pieces 18, a flange portion 22, and a plurality of support pieces 20. The inner diameter of the main body portion 14 is substantially equal to the outer diameter of the tube 62, and the tube 62 is inserted through the main body portion 14. The engaging pieces 18 extend from one end of the main body portion 14 in parallel with the axis X of the main body portion 14. The flange portion 22 extends radially outward from the other end of the main body portion 14. The support pieces 20 extend from the outer peripheral edge of the flange portion 22 in parallel with the axis X of the main body portion 14. The outer surface of the main body portion 14 includes a plurality of positioning protrusions 16 extending in the circumferential direction.

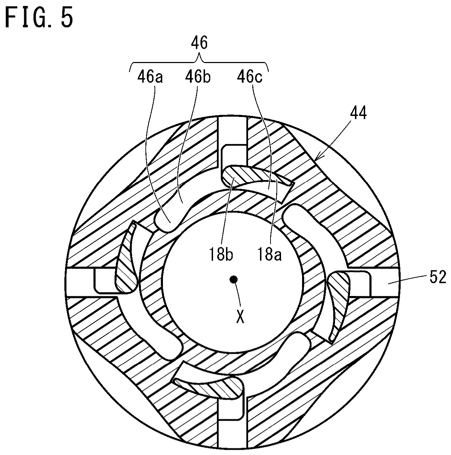

The engaging pieces 18 can each be bent and deformed. Due to the bending and deformation of the engaging piece 18, the distance from a distal end portion 18a of the engaging piece 18 to the axis X of the chuck 12 changes. The distal end portion 18a of the engaging piece 18 has a wing-shaped cross section when viewed from an X1 direction, and one end portion of the wing shape is thick (see FIG. 5). In the following description, the thick portion of the distal end portion 18a of the engaging piece 18 is referred to as a "thick portion 18b of the engaging piece 18". A claw portion 18c capable of being locked to the outer surface of the tube 62 is formed on the inner surface of each engaging piece 18. The plurality of support pieces 20 are arranged side by side in the circumferential direction with a slight gap therebetween. Each support piece 20 includes a support hole 20a extending in the circumferential direction.

The body 24 having a cylindrical shape includes a hole portion 26 penetrating the body 24 along the direction of the axis X thereof. The hole portion 26 of the body 24 includes a first hole portion 26a serving as a fluid passage, a second hole portion 26b connected to the first hole portion 26a and having a larger diameter than the first hole portion 26a, and a third hole portion 26c connected to the second hole portion 26b and having a larger diameter than the second hole portion 26b. The inner diameter of the second hole portion 26b is substantially equal to the outer diameter of the tube 62, and the tube 62 is inserted through the second hole portion 26b. The tube 62 is inserted into the hole portion 26 until the distal end of the tube 62 abuts against a stepped surface 26d formed between the first hole portion 26a and the second hole portion 26b. An annular packing 32 for sealing between the tube 62 and the body 24 is mounted on the third hole portion 26c.

A first end portion (an end portion in the X1 direction) of the body 24 is disposed inside the support pieces 20 of the chuck 12. The first end portion of the body 24 includes a plurality of support protrusions 34 protruding radially outward. The plurality of support protrusions 34 are arranged side by side in the circumferential direction of the body 24. The chuck 12 is fixed to the body 24 by engagement of the respective support protrusions 34 of the body 24 with the respective support holes 20a of the chuck 12. In the present embodiment, the number of the support pieces 20 of the chuck 12 and the number of the support protrusions 34 of the body 24 are four, but the number of the support pieces 20 and the number of the support protrusions 34 are not limited thereto.

A second end portion (an end portion in an X2 direction) of the body 24 includes a male thread 36 on the outer periphery thereof. The body 24 includes a hexagonal flange portion 38 protruding outward between the first end portion and the second end portion. The flange portion 38 includes a first fixing groove 40 and a second fixing groove 42 on the side surface thereof that is close to the first end portion of the body 24. The first fixing groove 40 and the second fixing groove 42 are arranged side by side in the circumferential direction with a predetermined distance therebetween. A tapered surface 42a is formed at an end portion of the second fixing groove 42 that is close to the first fixing groove 40. The body 24 includes a lateral hole 28 penetrating a wall surface of the body 24 and communicating with the second hole portion 26b. The outer surface of the body 24 includes a protruding wall 30 continuous with the flange portion 38, and the flange portion 38 includes a pair of latching grooves 31 in the vicinity of the protruding wall 30.

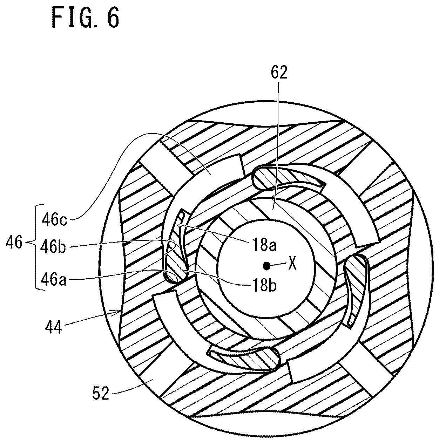

The sleeve 44 having a cylindrical shape is disposed outside the chuck 12 and outside the first end portion of the body 24. The sleeve 44 can rotate about the axis X of the body 24 relative to the body 24. As shown in FIGS. 5 and 6, a first end portion (an end portion in the X1 direction) of the sleeve 44 includes a plurality of cam portions 46 that guide the distal end portions 18a of the engaging pieces 18 of the chuck 12. The cam portions 46 can be formed as grooves having a width substantially equal to the thickness of the thick portions 18b of the engaging pieces 18. In the illustrated example, the cam portions 46 each include a first groove portion 46a (a first portion), a second groove portion 46b (a second portion), and a third groove portion 46c (a third portion). The first groove portion 46a is closest to the axis X of the sleeve 44. The second groove portion 46b is connected to the first groove portion 46a and is gradually separated from the axis X of the sleeve 44. The third groove portion 46c is connected to the second groove portion 46b and extends in the circumferential direction while keeping a constant distance from the axis X of the sleeve 44. In the present embodiment, the cam portions 46 have a constant width, but the width of the third groove portion 46c may be different from the width of the first groove portion 46a and the second groove portion 46b.

In the case where the thick portion 18b of each engaging piece 18 is located in the first groove portion 46a, the distance between the claw portion 18c of the engaging piece 18 and the axis X of the chuck 12 is smaller than in the case where the thick portion 18b of the engaging piece 18 is located in the third groove portion 46c. In the present embodiment, the number of the engaging pieces 18 of the chuck 12 and the number of the cam portions 46 of the sleeve 44 are four, but the number of the engaging pieces 18 and the number of the cam portions 46 are not limited thereto. The cam portions 46 of the sleeve 44 constitute a "guide mechanism" of the present embodiment.

A second end portion (an end portion in the X2 direction) of the sleeve 44 includes a fixing claw 48. The fixing claw 48 is formed of two slits extending from the other end edge of the sleeve 44 in parallel with the axis X of the sleeve 44. The distal end of the fixing claw 48 is displaceable in a direction in which the distal end protrudes from the outer surface of the sleeve 44. The fixing claw 48 of the sleeve 44 is engageable with the first fixing groove 40 or the second fixing groove 42 of the body 24.

The sleeve 44 is rotatable in a range of about 45 degrees relative to the body 24 between a first rotational position where the fixing claw 48 is engageable with the first fixing groove 40 of the body 24, and a second rotational position where the fixing claw 48 is engageable with the second fixing groove 42 of the body 24. When the sleeve 44 is located at the first rotational position, the thick portions 18b of the engaging pieces 18 of the chuck 12 are located at the centers of the third groove portions 46c of the sleeve 44 (see FIG. 5). When the sleeve 44 is located at the second rotational position, the thick portions 18b of the engaging pieces 18 of the chuck 12 are fitted into the first groove portions 46a of the sleeve 44 (see FIG. 6).

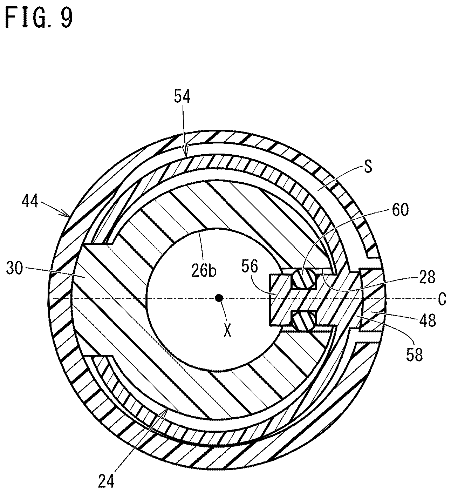

As shown in FIGS. 9 to 11, the thickness of the second end portion of the sleeve 44 is not uniform. That is, the inner diameter of the sleeve 44 increases from a position facing one side edge of the fixing claw 48 over a predetermined range in the circumferential direction. Accordingly, when the sleeve 44 is rotated from the first rotational position toward the second rotational position, a space S in which a second protruding portion 58 of the C-ring 54 to be described later is accommodated is secured inside the sleeve 44. The fixing claw 48 of the sleeve 44, the first fixing groove 40 of the body 24, and the second fixing groove 42 of the body 24 constitute a "rotation locking mechanism" of the present embodiment.

The sleeve 44 includes a plurality of positioning holes 50 extending in the circumferential direction. The positioning protrusions 16 of the chuck 12 engage with the positioning holes 50 of the sleeve 44 in the X2 direction, and the sleeve 44 is prevented from coming off. In order to allow the sleeve 44 to rotate, the circumferential length of the positioning holes 50 of the sleeve 44 is greater than the circumferential length of the positioning protrusions 16 of the chuck 12. In the present embodiment, the number of the positioning protrusions 16 of the chuck 12 and the number of the positioning holes 50 of the sleeve 44 are two, but the number of the positioning protrusions 16 and the number of the positioning holes 50 are not limited thereto.

The first end portion of the sleeve 44 includes a plurality of display windows 52 cut out in a slit shape. The operator can visually recognize the internal space of the sleeve 44 through the display windows 52. When the sleeve 44 is located at the first rotational position, the operator can visually recognize the engaging pieces 18 of the chuck 12 through the display windows 52 of the sleeve 44. When the sleeve 44 is located at the second rotational position, the operator cannot visually recognize the engaging pieces 18 of the chuck 12 from the display windows 52 of the sleeve 44. The engaging pieces 18 may be colored so that the operator can easily visually recognize the engaging pieces 18.

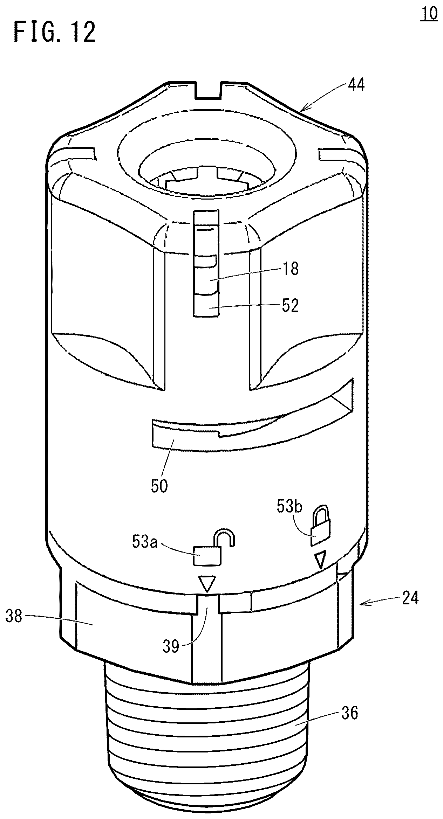

As shown in FIG. 12, a first mark 53a and a second mark 53b are displayed on the outer surface of the second end portion of the sleeve 44. The first mark 53a is aligned with a mark 39 of the flange portion 38 of the body 24 when the sleeve 44 is located at the first rotational position. The second mark 53b is aligned with the mark 39 of the flange portion 38 of the body 24 when the sleeve 44 is located at the second rotational position. Accordingly, the operator can confirm that the sleeve 44 is located at the first rotational position or the second rotational position.

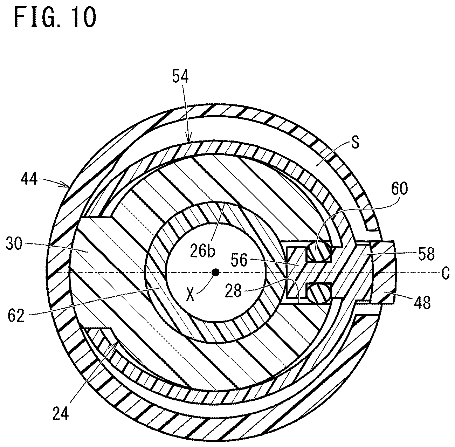

The C-ring 54 has a predetermined elasticity and is disposed between the outer surface of the body 24 and the inner surface of the sleeve 44. The C-ring 54 has an oval shape with an axis of symmetry C of the C-ring 54 as a minor axis in a natural state (see FIG. 9). The C-ring 54 can be deformed into an oval shape with the axis of symmetry C of the C-ring 54 as a major axis (see FIG. 10). Latching portions 55 formed at both ends of the C-ring 54 engage with the latching grooves 31 of the body 24.

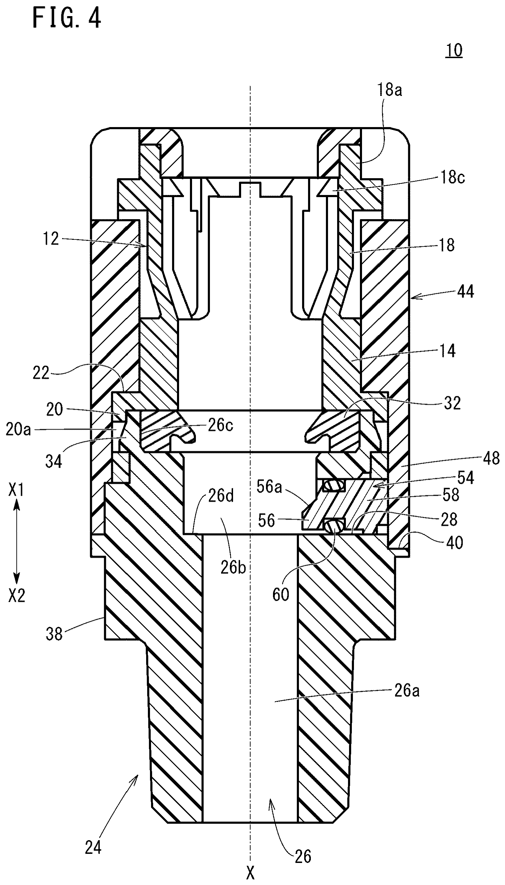

The C-ring 54 includes, at a portion thereof farthest from the protruding wall 30 of the body 24, a first protruding portion 56 protruding inward and the second protruding portion 58 protruding outward. The first protruding portion 56 is inserted through the lateral hole 28 of the body 24, and the distal end of the first protruding portion 56 enters the second hole portion 26b of the body 24. The first protruding portion 56 includes a tapered surface 56a that can abut against the distal end of the tube 62 (see FIG. 4). An O-ring 60 that holds the second hole portion 26b in an airtight manner from the outside is mounted on the outer periphery of the first protruding portion 56. The second protruding portion 58 can abut against the fixing claw 48 of the sleeve 44. The C-ring 54 constitutes a "lock release mechanism" of the present embodiment that releases the restriction on the rotation of the sleeve 44.

Next, the mechanism of action in which the tube 62 is connected to the fitting 10 according to the present embodiment will be described.

A state where the sleeve 44 is located at the first rotational position and the tube 62 is not inserted into the fitting 10 is defined as an initial state. The fixing claw 48 of the sleeve 44 is engaged with the first fixing groove 40 of the body 24, and the outer surface of the fixing claw 48 does not protrude from the outer surface of the sleeve 44 (see FIG. 4). The second protruding portion 58 of the C-ring 54 is in light contact with the fixing claw 48 of the sleeve 44 (see FIGS. 4 and 9). The thick portions 18b of the engaging pieces 18 of the chuck 12 are located at the centers of the third groove portions 46c of the cam portions 46 of the sleeve 44 (see FIG. 5). Although the second protruding portion 58 is described as being in light contact with the fixing claw 48 in the initial state, the second protruding portion 58 may face the fixing claw 48 with a slight gap therebetween in the initial state.

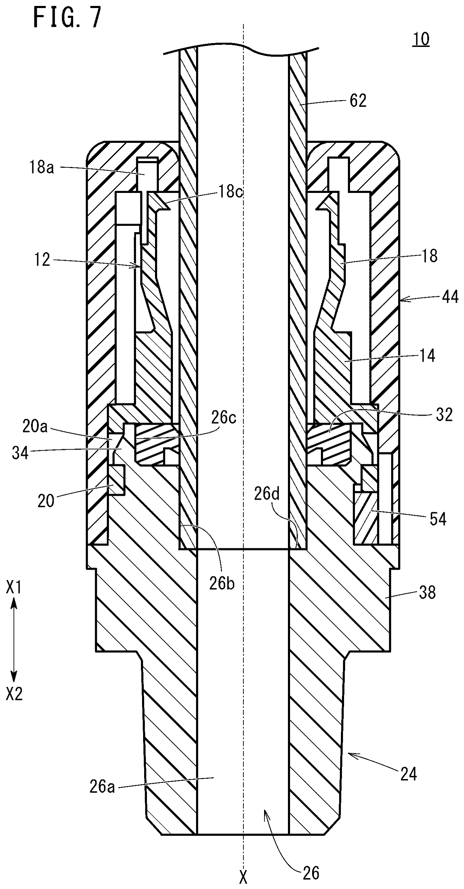

From the initial state, the tube 62 is inserted into the fitting 10 by the operator. Specifically, the tube 62 inserted from an opening portion at one end of the sleeve 44 is inserted through the main body portion 14 of the chuck 12, and is inserted through the second hole portion 26b of the body 24. At this time, the thick portions 18b of the engaging pieces 18 of the chuck 12 are located in the third groove portions 46c of the cam portions 46 of the sleeve 44, and the claw portions 18c of the engaging pieces 18 are sufficiently separated from the axis X of the chuck 12. Therefore, when the tube 62 is inserted, the claw portions 18c of the engaging pieces 18 do not contact the tube 62, and the tube 62 is not damaged by the claw portions 18c (see FIG. 7).

When the distal end of the tube 62 approaches the stepped surface 26d of the body 24, the distal end of the tube 62 abuts against the tapered surface 56a of the first protruding portion 56 of the C-ring 54. When the tube 62 is inserted into the hole portion 26 of the body 24 until the distal end of the tube 62 abuts against the stepped surface 26d of the body 24, the C-ring 54 is deformed into an oval shape with the axis of symmetry C of the C-ring 54 as a major axis by a force received from the distal end of the tube 62. Accordingly, the second protruding portion 58 of the C-ring 54 presses the fixing claw 48 of the sleeve 44 outward.

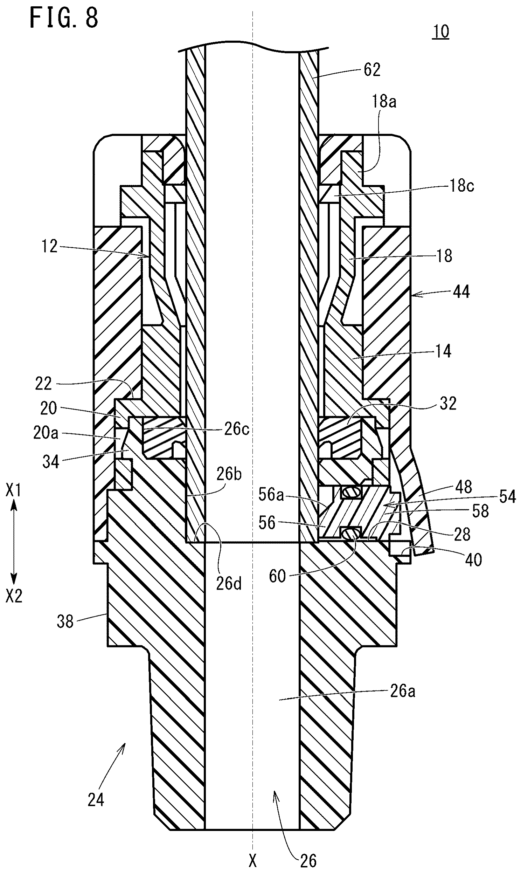

As shown in FIGS. 8 and 10, the fixing claw 48 pressed by the second protruding portion 58 of the C-ring 54 protrudes from the outer surface of the sleeve 44 and is disengaged from the first fixing groove 40 of the body 24. As a result, the sleeve 44 is brought into a state of being rotatable about the axis X of the body 24 relative to the body 24. The fixing claw 48 protrudes from the outer surface of the sleeve 44, whereby the operator can confirm that the tube 62 has been inserted to a predetermined position.

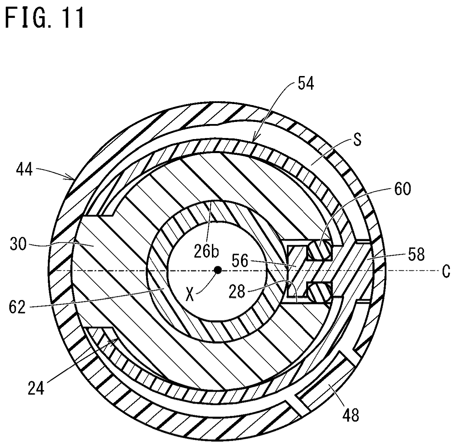

Next, the sleeve 44 is rotated from the first rotational position toward the second rotational position by the operator. When the sleeve 44 is rotated, the fixing claw 48 of the sleeve 44 slides on the outer surface of the body 24 between the first fixing groove 40 and the second fixing groove 42 while protruding from the outer surface of the sleeve 44. At this time, as shown in FIG. 11, the second protruding portion 58 of the C-ring 54 is accommodated in the space S inside the sleeve 44 (see FIG. 11). Therefore, the tube 62 is not pressed by the first protruding portion 56 of the C-ring 54.

When the sleeve 44 is rotated to the second rotational position, the fixing claw 48 engages with the second fixing groove 42 by its restoring force, and the rotation of the sleeve 44 is restricted. Further, when the sleeve 44 is rotated to the second rotational position, the thick portions 18b of the engaging pieces 18 of the chuck 12 move along the cam portions 46 of the sleeve 44 and are fitted into the first groove portions 46a of the cam portions 46 (see FIG. 6). When the thick portions 18b of the engaging pieces 18 are fitted into the first groove portions 46a of the cam portions 46, the claw portions 18c of the engaging pieces 18 approach the axis X of the chuck 12 and are locked to the outer surface of the tube 62. As a result, the tube 62 is prevented from coming off, and the connection of the tube 62 to fitting 10 is completed.

When the sleeve 44 is rotated to the second rotational position, the operator cannot visually recognize the engaging pieces 18 of the chuck 12 from the display windows 52. Further, when the sleeve 44 is rotated to the second rotational position, the second mark 53b displayed on the sleeve 44 is aligned with the mark 39 of the body 24. Therefore, the operator can confirm that the connection of the tube 62 to the fitting 10 is completed.

The fitting 10 can be used repeatedly. When the tube 62 connected to the fitting 10 is separated from the fitting 10, the sleeve 44 at the second rotational position is rotated toward the first rotational position by the operator. In this case, the fixing claw 48 of the sleeve 44 is easily disengaged from the second fixing groove 42 while being guided by the tapered surface 42a of the second fixing groove 42. When the sleeve 44 is rotated toward the first rotational position, the thick portions 18b of the engaging pieces 18 of the chuck 12 move along the cam portions 46 of the sleeve 44, and reach the third groove portions 46c via the second groove portions 46b. As a result, the claw portions 18c of the engaging pieces 18 of the chuck 12 are gradually separated from the axis X of the chuck 12 and are separated from the outer surface of the tube 62.

When the sleeve 44 is rotated to the first rotational position, the fixing claw 48 engages with the first fixing groove 40 by its restoring force, and the rotation of the sleeve 44 is restricted. Since the claw portions 18c of the engaging pieces 18 of the chuck 12 are separated from the outer surface of the tube 62, the tube 62 can be easily pulled out from the fitting 10. Since the latching portions 55 of the C-ring 54 are engaged with the latching grooves 31 of the body 24, the C-ring 54 easily returns to the initial state.

According to the fitting 10 of the present embodiment, the tube 62 is inserted in a state where the sleeve 44 is located at the first rotational position, and therefore, when the tube 62 is inserted, the claw portions 18c of the engaging pieces 18 do not contact the tube 62 and the tube 62 is not damaged.

Further, unless the tube 62 is inserted until the distal end of the tube 62 abuts against the stepped surface 26d of the body 24, the fixing claw 48 of the sleeve 44 is not disengaged from the first fixing groove 40 of the body 24, and the operator cannot rotate the sleeve 44. Therefore, insufficient insertion of the tube 62 is prevented.

Further, the tube 62 is prevented from coming off by the sleeve 44 being rotated to the second rotational position. At this time, the operator cannot visually recognize the engaging pieces 18 of the chuck 12 from the display windows 52. In addition, the second mark 53b displayed on the sleeve 44 is aligned with the mark 39 of the body 24. Therefore, the operator can easily confirm that the connection of the tube 62 to the fitting 10 is completed.

Moreover, since the chuck 12, the body 24, the sleeve 44 and the C-ring 54 constituting the fitting 10 are all made of resin, the chemical resistance is improved. Further, after the connection of the tube 62 to the fitting 10 is completed, the packing 32 and the O-ring 60, which are the constituent members for exhibiting sealing properties, do not come into sliding contact with other members, and therefore, the low dust generation property is maintained. Furthermore, since the tube 62 once connected to the fitting 10 can be easily separated from the fitting 10, the fitting 10 can be used a plurality of times.

### (Second Embodiment)

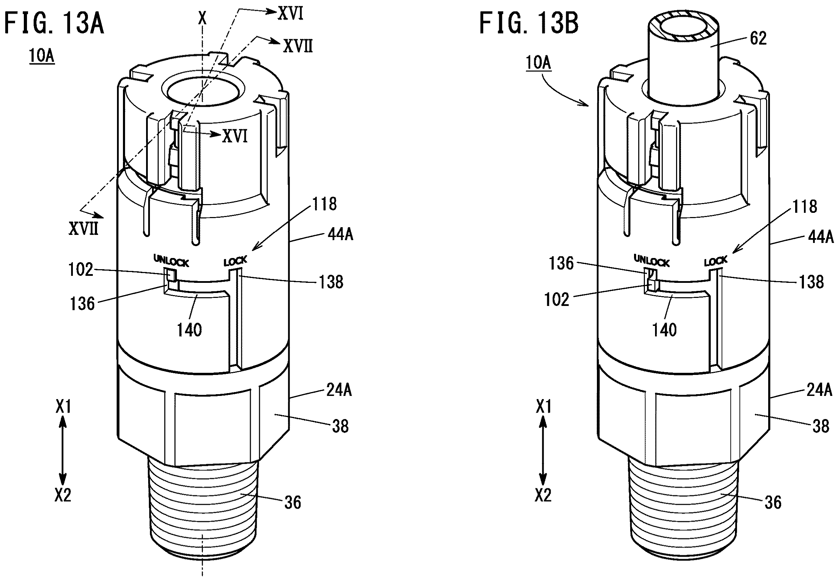

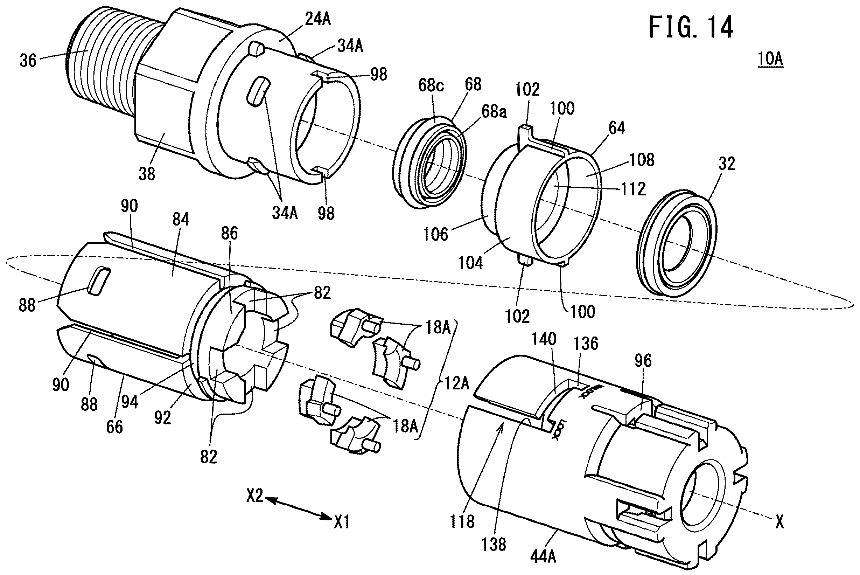

As shown in FIGS. 13A and 14, a fitting 10A according to the present embodiment includes a chuck 12A, a body 24A, a sleeve 44A, a spacer 64, a guide 66, a cushion 68, and a packing 32. The chuck 12A, the body 24A, the sleeve 44A, the spacer 64, and the guide 66 are all made of a resin material. Further, the cushion 68 and the packing 32 are made of an elastic material such as rubber or elastomer. As shown in FIG. 13B, when the fitting 10A is used, a tube 62 (pipe) made of resin is connected to the fitting 10A. It should be noted that, in the present embodiment as well, the axes X of the chuck 12A, a main body portion 14A, the body 24A, and the sleeve 44A in FIG. 13A coincide with each other.

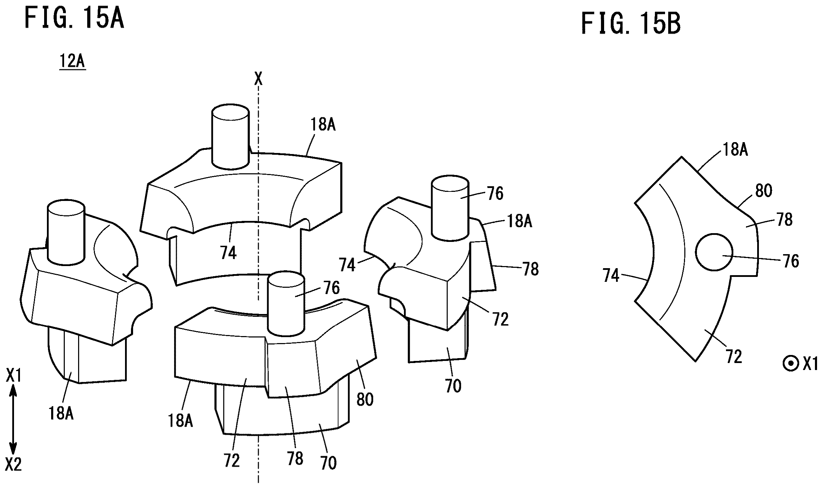

As shown in FIGS. 14 to 15B, the chuck 12A includes a plurality of engaging pieces 18A arranged side by side in the circumferential direction. In the illustrated example, four engaging pieces 18A are provided, and they have the same shape. The engaging pieces 18A each include a slide portion 70, a base portion 72, a claw portion 74, a release pin 76, an outer peripheral protruding portion 78, and a sliding surface 80. The base portion 72 is an arc-shaped portion extending in the circumferential direction. The slide portion 70 protrudes in a columnar shape in the X2 direction from the base portion 72. The slide portion 70 engages with a slide groove 82 (FIG. 14) of the guide 66 to be described later. The slide portion 70 prevents the displacement of the engaging piece 18A in the circumferential direction, and restricts the displacement direction of the engaging piece 18A to the radial direction.

The claw portion 74 protrudes inward from the base portion 72. The inner end portion of the claw portion 74 forms a sharp ridge. The inner diameter (radius of curvature) of the claw portion 74 is smaller than the outer diameter of the tube 62. The claw portion 74 bites into the outer surface of the tube 62 to prevent the tube 62 from being pulled out.

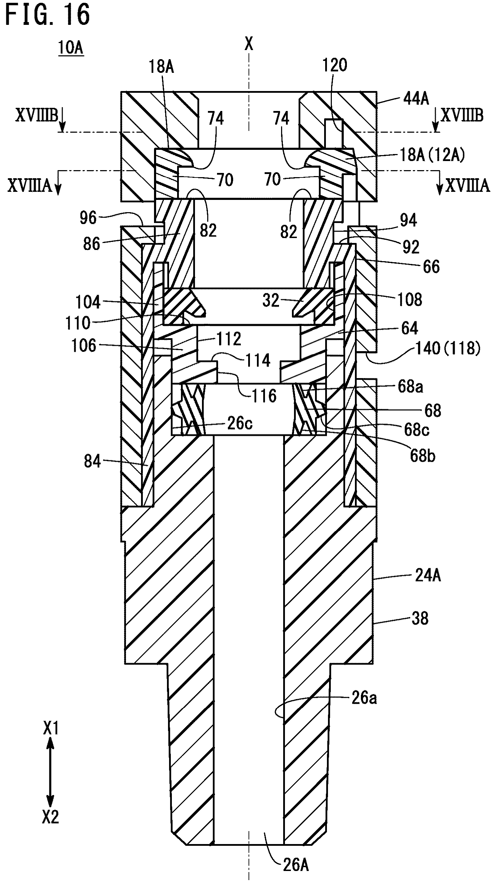

The release pin 76 protrudes in the X1 direction from the base portion 72. The release pin 76 engages with a cam groove 120 (FIG. 16) of the sleeve 44A to be described later, and displaces the engaging piece 18A in a direction away from the axis X in accordance with the rotation operation of the sleeve 44A.

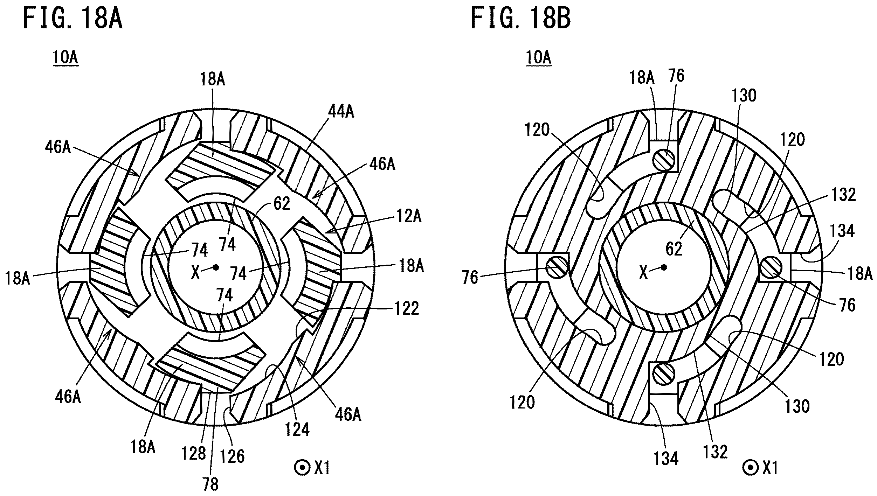

The outer peripheral protruding portion 78 is formed as a protrusion that bulges from the base portion 72 in a direction away from the axis X. The outer peripheral protruding portion 78 is pressed in a direction approaching the axis X by a cam portion 46A (FIG. 18A) of the sleeve 44A to be described later. The sliding surface 80 is a surface formed on the outer peripheries of a part of the base portion 72 and the outer peripheral protruding portion 78, and the distance thereof from the axis X gradually changes in the circumferential direction. The sliding surface 80 is also inclined with respect to the direction of the axis X. The sliding surface 80 slides on the cam portion 46A of the sleeve 44A, and displaces the engaging piece 18A in a direction approaching the axis X in accordance with the rotation operation of the sleeve 44A.

As shown in FIG. 16, the plurality of engaging pieces 18A constituting the chuck 12A are accommodated in the sleeve 44A. The engaging pieces 18A are supported by the guide 66 from the X2 direction.

As shown in FIGS. 14, 16, and 17, the guide 66 includes a cylindrical support cylinder 84, and a cylindrical guide cylinder 86 continuous with a first end portion (an end portion in the X1 direction) of the support cylinder 84. The support cylinder 84 extends in the direction of the axis X, and a second end portion (an end portion in the X2 direction) thereof is mounted on the body 24A. Support holes 88 to be engaged with support protrusions 34A of the body 24A are formed at predetermined positions of the support cylinder 84. Further, a plurality of slit grooves 90 extending in the direction of the axis X are formed in the support cylinder 84. The slit grooves 90 extend to the guide cylinder 86 and divides the support cylinder 84 into a plurality of sections in the circumferential direction. In the illustrated example, four slit grooves 90 are provided at an angle of 90° in the circumferential direction. However, the number of the slit grooves 90 is not limited to the above example. The support cylinder 84 includes, at the first end portion thereof, a shoulder portion 92 extending radially inward in a wall shape. An end portion of the shoulder portion 92 on the inner peripheral side is connected to the guide cylinder 86.

The guide cylinder 86 is formed in a cylindrical shape having an outer diameter smaller than that of the support cylinder 84, and extends in the direction of the axis X. The inner diameter of the guide cylinder 86 is formed to be slightly larger than the outer diameter of the tube 62. A second end portion of the guide cylinder 86 protrudes a short distance in the X2 direction from the shoulder portion 92. Therefore, the second end portion of the guide cylinder 86 is located inside the support cylinder 84. Inside the support cylinder 84, the outer surface of the guide cylinder 86 is separated from the inner surface of the support cylinder 84. A first end portion of the spacer 64 is accommodated in a gap between the guide cylinder 86 and the support cylinder 84.

The guide cylinder 86 includes a circumferential groove 94 in the vicinity of the shoulder portion 92. The circumferential groove 94 is formed in a groove shape formed by the outer surface of the guide cylinder 86 being recessed inward, and is formed over the entire region of the guide cylinder 86 in the circumferential direction. A retaining protrusion 96 of the sleeve 44A engages with the circumferential groove 94. The circumferential groove 94 prevents the sleeve 44A from being pulled out from the body 24A. Further, the circumferential groove 94 guides the circumferential sliding of the retaining protrusion 96 of the sleeve 44A, thereby allowing the sleeve 44A to rotate about the axis X.

A plurality of slide grooves 82 are formed in a first end portion of the guide cylinder 86. The slide grooves 82 are formed by cutting out the first end portion of the guide cylinder 86 so as to be recessed toward the X2 direction, and extend in the radial direction. The slide grooves 82 are formed in the same number (four in the illustrated example) as the engaging pieces 18A. The circumferential position of the slide grooves 82 may be the same as the circumferential position of the slit grooves 90.

The body 24A has a basic structure similar to that of the body 24 described with reference to FIGS. 1 to 4. Therefore, in the body 24A, the same components as those of the body 24 are denoted by the same reference numerals, and the description of some components will be omitted.

As shown in FIGS. 14, 16, and 17, a hole portion 26A of the body 24A includes a first hole portion 26a, and a third hole portion 26c connected to the first hole portion 26a. The tube 62 is not inserted into the hole portion 26A but is inserted into the spacer 64. The third hole portion 26c accommodates the cushion 68 and a part of the vicinity of a second end portion of the spacer 64.

A first end portion (an end portion in the X1 direction) of the body 24A is disposed inside the support cylinder 84 of the guide 66. The first end portion of the body 24A includes a plurality of support protrusions 34A protruding radially outward. The plurality of support protrusions 34A are arranged side by side in the circumferential direction of the body 24A. The guide 66 is fixed to the body 24A by engagement of the respective support protrusions 34A of the body 24A with the respective support holes 88 of the guide 66. In the present embodiment, the number of the support protrusions 34A and the number of the support holes 88 are four, but are not limited thereto.

The first end portion of the body 24A includes a plurality of accommodation grooves 98. The accommodation grooves 98 extend a short distance in the X2 direction of the body 24A, and in the illustrated example, two accommodation grooves 98 are provided at an interval of 180° in the circumferential direction. The accommodation grooves 98 are disposed at the same position in the circumferential direction as rotation restricting pieces 100 and rotation locking protrusions 102 of the spacer 64 to be described later. The accommodation grooves 98 respectively accommodate the rotation restricting pieces 100 of the spacer 64 to be described later.

The cushion 68 is formed in a cylindrical shape and includes a first annular groove 68a, a second annular groove 68b, and a central protrusion 68c. The first annular groove 68a is located at a first end portion of the cushion 68 and is formed as a groove having a V-shaped cross section by cutting out the first end portion of the cushion 68 so as to be recessed in the X2 direction. The first annular groove 68a is formed in an annular shape over the entire circumference of the first end portion of the cushion 68. The second annular groove 68b is located at a second end portion of the cushion 68 and is formed as a groove having a V-shaped cross section by cutting out the second end portion of the cushion 68 so as to be recessed in the X1 direction. The second annular groove 68b is formed in an annular shape over the entire circumference of the second end portion of the cushion 68.

The central protrusion 68c is an annular protrusion that bulges radially outward from the axis X of the cushion 68. The cushion 68 is flexibly deformable with respect to a compressive load in the direction of the axis X. The cushion 68 is disposed in the third hole portion 26c of the body 24A, and abuts against the second end portion of the spacer 64 by an elastic restoring force. The cushion 68 seals a gap between the spacer 64 and the body 24A in a liquid-tight and air-tight manner. The cushion 68 is compressed and deformed when pressed in the X2 direction by the spacer 64, and allows the spacer 64 to be displaced in the X2 direction.

As shown in FIG. 14, the spacer 64 is a member formed in a substantially cylindrical shape. The spacer 64 includes a packing accommodating portion 104, and a tube accommodating portion 106 adjacent to the packing accommodating portion 104 in the X2 direction. The packing accommodating portion 104 has a larger outer diameter than the tube accommodating portion 106, and the outer diameter thereof is formed to be substantially equal to the outer dimension of the first end portion of the body 24A. The packing accommodating portion 104 includes a packing accommodating hole 108 therein. The packing accommodating hole 108 has an inner diameter substantially equal to that of the third hole portion 26c of the body 24A, and accommodates the annular packing 32.

The tube accommodating portion 106 is connected to the packing accommodating portion 104 via a step portion 110 perpendicular to the direction of the axis X. The outer diameter of the tube accommodating portion 106 is slightly smaller than the inner diameter of the third hole portion 26c, and the tube accommodating portion 106 is accommodated in the third hole portion 26c. The tube accommodating portion 106 includes a tube accommodating hole 112 on the inner peripheral side thereof. The tube accommodating hole 112 is connected to the X2 direction side of the packing accommodating hole 108. The tube accommodating hole 112 has an inner diameter formed to be substantially the same as the outer diameter of the tube 62, and accommodates the tube 62.

As shown in FIG. 16, a stopper wall 114 protruding toward the axis X is formed in the tube accommodating hole 112 on the X2 direction side. The stopper wall 114 receives the distal end of the inserted tube 62. A communication hole 116 is formed in the stopper wall 114 about the axis X. The communication hole 116 allows communication between the tube accommodating hole 112 and the hole portion 26A of the body 24A.

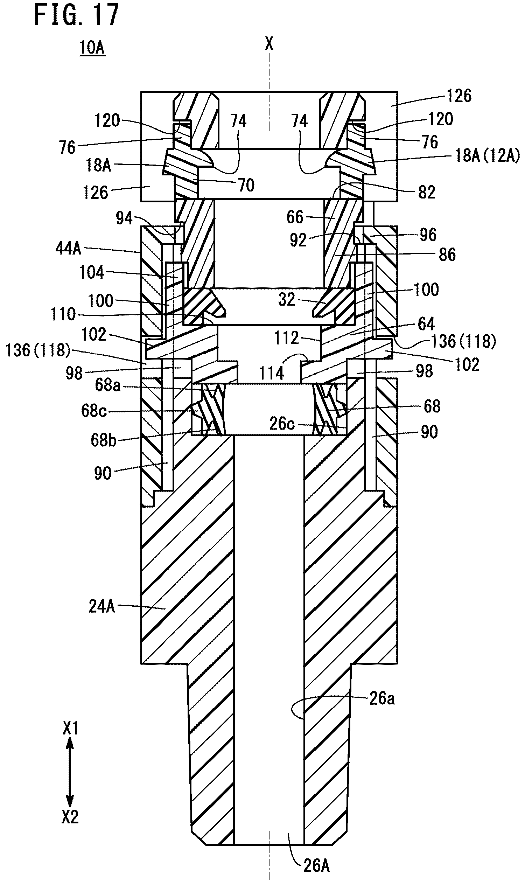

As shown in FIGS. 14 and 17, the spacer 64 further includes the rotation restricting pieces 100. The rotation restricting pieces 100 are located on the outer periphery of the packing accommodating portion 104 and protrude outward from the outer surface of the packing accommodating portion 104. The rotation restricting pieces 100 are formed in a rib shape elongated in the direction of the axis X. The rotation restricting pieces 100 are inserted into the slit grooves 90 of the guide 66. The rotation restricting pieces 100 prevent the spacer 64 from being displaced in the circumferential direction. The rotation locking protrusion 102 is formed at a second end portion of each rotation restricting piece 100. The rotation locking protrusions 102 protrude in a columnar shape further outward from the rotation restricting pieces 100. The rotation locking protrusions 102 are inserted into lock grooves 118 of the sleeve 44A to be described later.

As shown in FIGS. 14, 16, and 17, the packing 32 is disposed in the packing accommodating hole 108 so as to be sandwiched between the step portion 110 of the spacer 64 and the guide cylinder 86 of the guide 66 in the direction of the axis X. The packing 32 is formed in an annular shape. The inner diameter of the packing 32 is smaller than the outer shape of the tube 62. When the tube 62 is inserted, the packing 32 is expanded in diameter while being elastically deformed, and is brought into close contact with the outer surface of the tube 62. The outer surface of the packing 32 is in close contact with the inner surface of the packing accommodating hole 108. The packing 32 seals a gap between the tube 62 and the spacer 64 in a liquid-tight and air-tight manner.

The sleeve 44A is formed in a substantially cylindrical shape. The sleeve 44A is disposed outwardly of the chuck 12A, the spacer 64, the guide 66, and the first end portion of the body 24A. The sleeve 44A is rotatable about the axis X relative to the body 24A.

As shown in FIGS. 18A and 18B, a first end portion (an end portion in the X1 direction) of the sleeve 44A includes cam portions 46A that guide the engaging pieces 18A of the chuck 12A, and cam grooves 120. As shown in FIG. 18A, the cam portions 46A are located outside the engaging pieces 18A. Four cam portions 46A are provided at intervals of 90° in the circumferential direction.

The cam portions 46A each include a pressing portion 122 (a first portion) that is closest to the axis X, an inclined portion 124 (a second portion) that is connected to the pressing portion 122 in the circumferential direction and is gradually separated from the axis X, and an opening portion 126 (a third portion) that opens outward. In the case where a protruding end portion 128 of the sliding surface 80 of each engaging piece 18A that protrudes most outward from the axis X is located at the opening portion 126 (FIG. 18A), the distance between the claw portion 74 of the engaging piece 18A and the axis X becomes largest. Further, in the case where the protruding end portion 128 of the engaging piece 18A is located at the pressing portion 122, the distance between the claw portion 74 of the engaging piece 18A and the axis X is reduced. The cam portions 46A constitute at least a part of the "guide mechanism" of the present embodiment.

As shown in FIG. 18B, the cam grooves 120 are formed on the X1 direction side of the chuck 12A. The release pins 76 of the engaging pieces 18A are inserted into the cam grooves 120, respectively. The width of the cam grooves 120 is substantially constant and slightly larger than the diameter of the release pins 76. The cam grooves 120 each include a first groove portion 130 that is closest to the axis X of the sleeve 44A, a second groove portion 132 that is connected to the first groove portion 130 and is gradually separated from the axis X, and a third groove portion 134 that is connected to the second groove portion 132 and extends in the radial direction. It should be noted that, in the cam groove 120, the widths of the first groove portion 130, the second groove portion 132, and the third groove portion 134 may be different from each other.

In the case where the release pin 76 of each engaging piece 18A is located in the first groove portion 130, the distance between the engaging piece 18A and the axis X is small. Further, in the case where the release pin 76 is located in the third groove portion 134, the distance between the engaging piece 18A and the axis X is increased. When the engaging piece 18A is separated from the axis X, the cam groove 120 abuts against the release pin 76, and displaces the engaging piece 18A in a direction away from the axis X. The cam grooves 120 are provided in the same number (four, for example) as the engaging pieces 18A. The cam grooves 120 constitute another part of the "guide mechanism" of the present embodiment.

As shown in FIGS. 14 and 16, the sleeve 44A includes the retaining protrusion 96 located outside the circumferential groove 94 of the guide 66. The retaining protrusion 96 is a rib-shaped protrusion that protrudes from the sleeve 44A toward the axis X. The retaining protrusion 96 engages with the circumferential groove 94 of the guide 66 to thereby prevent the sleeve 44A from being displaced in the direction of the axis X. The retaining protrusion 96 can be displaced in the circumferential direction along the circumferential groove 94. Therefore, the sleeve 44A is rotatable in the circumferential direction relative to the guide 66 and the body 24A.

As shown in FIGS. 13A and 13B, the lock groove 118 is formed at a predetermined position of a side portion of the sleeve 44A. The lock groove 118 includes a first fixing groove 136 and a second fixing groove 138 that extend in the direction of the axis X, and a rotation groove 140 extending in the circumferential direction. The first fixing groove 136 is formed at a first end portion of the rotation groove 140 in the circumferential direction. The first fixing groove 136 protrudes in the X1 direction from the rotation groove 140. The second fixing groove 138 is formed at a second end portion of the rotation groove 140 in the circumferential direction. The second fixing groove 138 extends in the X1 direction and the X2 direction from the rotation groove 140. The rotation groove 140 extends over a predetermined angular range (for example, 45°) in the circumferential direction. The sleeve 44A is rotatable relative to the body 24A within the angular range of the rotation groove 140.

As shown in FIGS. 13A and 17, the rotation locking protrusion 102 of the spacer 64 is inserted into the lock groove 118. When the sleeve 44A is located at the first rotational position, the rotation locking protrusion 102 is located in the first fixing groove 136. When the sleeve 44A is located at the second rotational position, the rotation locking protrusion 102 is located in the second fixing groove 138.

In a state where the spacer 64 is not pressed in the X2 direction by the tube 62, the spacer 64 is positioned closer to the X1 direction side by the elastic force of the cushion 68. For example, in the case where the spacer 64 is not pressed by the tube 62 at the first rotational position, the rotation locking protrusion 102 engages with the first fixing groove 136 as shown in FIG. 13A. Therefore, even in the case where the sleeve 44A is attempted to be rotated in the circumferential direction, the rotation locking protrusion 102 is caught in the first fixing groove 136 and the rotation of the sleeve 44A is thereby restricted. Similarly, also at the second rotational position, the rotation locking protrusion 102 is caught in the second fixing groove 138 and the rotation of the sleeve 44A is thereby restricted. That is, the lock groove 118 of the sleeve 44A, the rotation locking protrusion 102 of the spacer 64, and the cushion 68 constitute a "rotation locking mechanism" of the present embodiment. Further, the spacer 64 that is displaced in the X2 direction by receiving the pressing force of the tube 62 constitutes a "lock release mechanism" of the present embodiment.

As shown in FIG. 17, the lock grooves 118 of the sleeve 44A are provided in the same number as the rotation locking protrusions 102. The illustrated sleeve 44A includes, by way of example, two lock grooves 118 spaced apart by 180° in the circumferential direction.

Next, the mechanism of action in which the tube 62 is connected to the fitting 10A according to the present embodiment will be described.

As shown in FIG. 13A, a state where the sleeve 44A is located at the first rotational position and the tube 62 is not inserted into the fitting 10A is defined as an initial state. In the initial state, each rotation locking protrusion 102 of the spacer 64 engages with each first fixing groove 136 of the sleeve 44A. The rotation locking protrusion 102 is located to be deviated from the rotation groove 140 in the X1 direction.

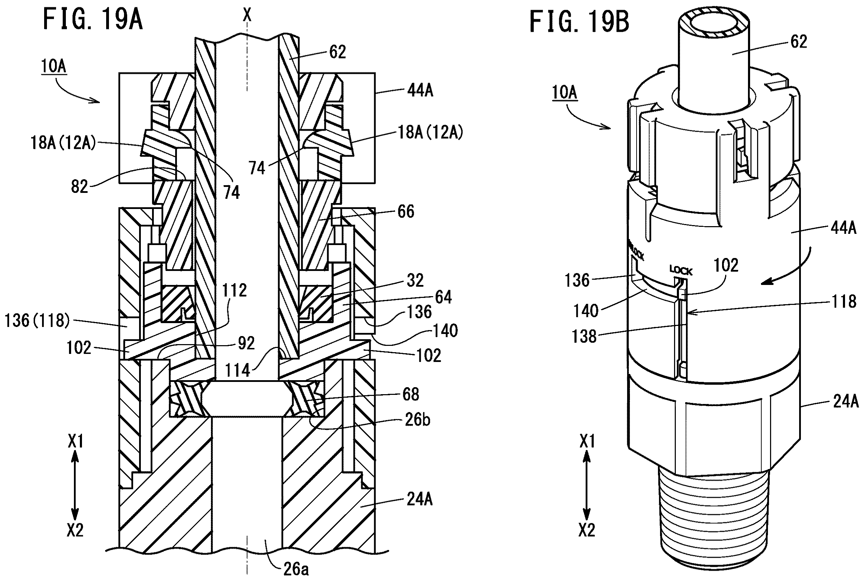

From the initial state, the tube 62 is inserted into the fitting 10A by the operator. As shown in FIG. 19A, the tube 62 inserted from an opening portion at the first end portion of the sleeve 44A is inserted through the chuck 12A. At this time, the engaging pieces 18A of the chuck 12A are sufficiently separated from the axis X. Therefore, when the tube 62 is inserted, the claw portions 74 of the engaging pieces 18A do not contact the tube 62, and the tube 62 is not damaged by the claw portions 74.

When the tube 62 is sufficiently inserted, the distal end of the tube 62 abuts against the stopper wall 114 of the spacer 64 and presses the spacer 64 in the X2 direction. The cushion 68 is compressed by the force received by the spacer 64, and the spacer 64 is displaced in the X2 direction. As a result, each rotation locking protrusion 102 of the spacer 64 is displaced in the X2 direction along the first fixing groove 136, and is displaced to one end portion of the rotation groove 140. As a result, the sleeve 44A is brought into a state of being rotatable about the axis X relative to the body 24A. By visually recognizing the position of the rotation locking protrusions 102, the operator can confirm that the tube 62 has been inserted to a predetermined position.

Next, the sleeve 44A is rotated by the operator from the first rotational position shown in FIG. 13B toward the second rotational position shown in FIG. 19B. The sleeve 44A is rotated about the axis X, and each rotation locking protrusion 102 moves relative to the sleeve 44A along the rotation groove 140 of the sleeve 44A.

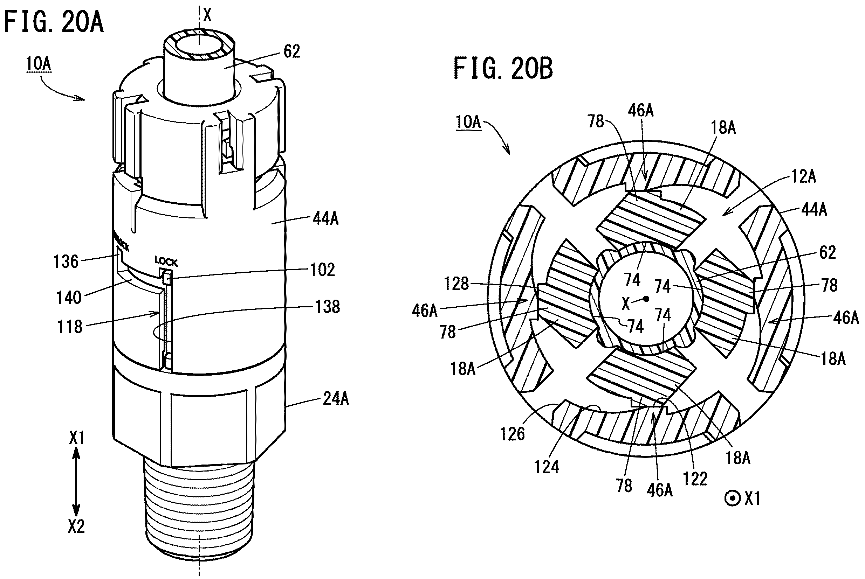

When the sleeve 44A is rotated to the second rotational position, the rotation locking protrusion 102 enters the second fixing groove 138. As shown in FIG. 20A, when the pushing of the tube 62 by the operator is released, the rotation locking protrusion 102 moves in the second fixing groove 138 in the X1 direction by the restoring force of the cushion 68, and the rotation locking protrusion 102 engages with the second fixing groove 138. This restricts the rotation of the sleeve 44A. Further, as shown in FIG. 20B, when the sleeve 44A is rotated to the second rotational position, the protruding end portions 128 of the engaging pieces 18A move along the cam portions 46A, the engaging pieces 18A approach the axis X, and the claw portions 74 of the engaging pieces 18A lock the outer surface of the tube 62. As a result, the tube 62 is prevented from coming off, and the connection of the tube 62 to the fitting 10A is completed.

Further, when the sleeve 44A is rotated to the second rotational position, the operator can visually recognize that each rotation locking protrusion 102 is engaged with the second fixing groove 138 (FIG. 20A). Therefore, the operator can confirm that the connection of the tube 62 is completed from the position of the rotation locking protrusions 102.

When the tube 62 is separated from the fitting 10A of the present embodiment, an operation of pushing the tube 62 is performed in order to release the engagement of each rotation locking protrusion 102 with the second fixing groove 138. Thereafter, the operator performs an operation of rotating the sleeve 44A located at the second rotational position toward the first rotational position. Each rotation locking protrusion 102 of the spacer 64 moves to the first fixing groove 136 through the rotation groove 140. At this time, as shown in FIG. 18B, the release pins 76 of the engaging pieces 18A move relative to the cam grooves 120, and are thereby guided in a direction away from the axis X. As a result, the engaging pieces 18A are gradually separated from the axis X, and the retaining of the tube 62 is released.

When the sleeve 44A is rotated to the first rotational position and pressing of the tube 62 toward the X2 direction is stopped, each rotation locking protrusion 102 engages with the first fixing groove 136 by the restoring force of the cushion 68. As a result, the rotation of the sleeve 44A is restricted and the initial state returns. Since the claw portions 74 of the engaging pieces 18A of the chuck 12A are separated from the outer surface of the tube 62, the tube 62 can be easily pulled out from the fitting 10A.

As described above, according to the fitting 10A of the present embodiment, the same effects as those of the fitting 10 of the first embodiment can be obtained. Further, with the fitting 10A of the present embodiment, the lock release mechanism can be operated without elastically deforming the hard sleeve 44A, and therefore, damage to the distal end of the tube 62 can be more effectively suppressed than with the fitting 10.

The present invention is not limited to the above disclosure, and various modifications are possible without departing from the essence and gist of the present invention.

The following supplementary notes are further disclosed in relation to the above-described disclosure.

### (Supplementary Note 1)

An aspect of the above-described disclosure is the fitting (10, 10A) to which the tube (62) is to be connected, the fitting including the chuck (12, 12A), the body (24, 24A), and the sleeve (44, 44A), wherein the chuck accommodated in the sleeve includes the engaging piece (18, 18A) provided with the claw portion (18c, 74) configured to be locked to the outer surface of the tube, the sleeve disposed outside the chuck is rotatable relative to the body between the first rotational position and the second rotational position, the fitting includes: the guide mechanism (46, 46A) configured to guide the engaging piece in a manner so that the distance from the engaging piece to the axis of the chuck changes in accordance with rotation of the sleeve; the rotation locking mechanism (40, 42, 48, 68, 102, 118) configured to restrict the rotation of the sleeve at the first rotational position and the second rotational position; and the lock release mechanism (54, 64) configured to, due to the tube being inserted to a predetermined position, release restriction on the rotation of the sleeve located at the first rotational position, and the claw portion does not contact the tube when the sleeve is located at the first rotational position, and the claw portion is locked to the outer surface of the tube when the sleeve is located at the second rotational position.

In the above fitting, since the tube is inserted in a state where the sleeve is located at the first rotational position, the claw portion of the engaging piece does not contact the tube and does not damage the tube when the tube is inserted.

### (Supplementary Note 2)

In the fitting according to Supplementary Note 1, the sleeve may include the cam portion (46, 46A) configured to guide the engaging piece in the radial direction of the chuck, and the guide mechanism may include the cam portion. According to this fitting, the tube can be reliably locked by the engaging piece by the rotation operation of the sleeve.

### (Supplementary Note 3)

In the fitting according to Supplementary Note 2, the cam portion may include the first portion (46a, 122) that is closest to the axis of the sleeve, and the second portion (46b, 124) that is connected to the first portion and is gradually separated from the axis of the sleeve, and when the sleeve is located at the second rotational position, the engaging piece may lock the tube by being pressed toward the axis of the sleeve by the first portion of the cam portion. The fitting can prevent the tube from coming off by rotating the sleeve.

### (Supplementary Note 4)

In the fitting according to Supplementary Note 2 or 3, the cam portion may include the cam groove (46a, 46b, 46c, 120) with which at least a part of the engaging piece engages. According to this fitting, the engaging piece can be brought close to or away from the axis in accordance with the rotation direction of the sleeve of the engaging piece by sliding between the cam groove and the engaging piece.

### (Supplementary Note 5)

In the fitting according to any one of Supplementary Notes 1 to 4, the rotation locking mechanism may include the fixing claw (48) of the sleeve, the first fixing groove (40) of the body, and the second fixing groove (42) of the body. According to this fitting, the fixing claw of the sleeve engages with the first fixing groove or the second fixing groove, whereby the rotation of the sleeve can be restricted.

### (Supplementary Note 6)

In the fitting according to Supplementary Note 5, the lock release mechanism may include the C-ring (54) disposed between the body and the sleeve, and the C-ring may include the first protruding portion (56) configured to abut against the distal end of the tube, and the second protruding portion (58) configured to abut against the fixing claw. This fitting can release the restriction on the rotation of the sleeve by pushing the tube.

### (Supplementary Note 7)

In the fitting according to Supplementary Note 6, the body may includes the hole portion (26, 26A) penetrating the body along the direction of the axis of the body, and the lateral hole (28) penetrating the wall surface of the body and communicating with the hole portion, and the first protruding portion of the C-ring may be inserted through the lateral hole. According to this fitting, the pressing force of the tube can be used for releasing the lock.

### (Supplementary Note 8)

In the fitting according to Supplementary Note 6, the chuck, the body, the sleeve, and the C-ring may be all made of resin. This fitting can be suitably used for equipment in which generation of metal powder due to wear is not preferred.

### (Supplementary Note 9)

In the fitting according to any one of Supplementary Notes 1 to 5, the sleeve may include the display window (52) configured to allow the internal space of the sleeve to be visually recognized. This fitting facilitates the tube connection operation because the connected state of the tube can be easily visually recognized.

### (Supplementary Note 10)

The fitting according to any one of Supplementary Notes 1 to 4 may further include the spacer (64) attached to the body so as to be displaceable in the direction of the axis of the body and configured to receive the distal end of the tube, wherein the rotation locking mechanism may include the rotation locking protrusion (102) provided on the spacer and protruding outward from the spacer, and the lock groove (118) provided on the sleeve and configured to engage with the rotation locking protrusion. This fitting does not require a lateral hole penetrating the body, and has therefore excellent sealing properties.

### (Supplementary Note 11)

The fitting according to Supplementary Note 10 may further include the guide (66) fixed to the body, configured to support the chuck in a manner so that the chuck is displaceable in the radial direction of the chuck and configured to accommodate the spacer, wherein the sleeve may be rotatably attached to the body via the guide so as to accommodate the guide and the chuck. According to this fitting, the chuck and the guide are provided as separate members, whereby the displacement of the engaging piece is facilitated, and smooth operation is enabled.

### (Supplementary Note 12)

The fitting according to Supplementary Note 11 may further include the cushion (68) having a cylindrical shape and configured to seal a gap between the spacer and the body, wherein the cushion may include the first annular groove (68a) formed at the first end portion of the cushion in the direction of the axis of the body, and the second annular groove (68b) formed at the second end portion of the cushion in the direction of the axis of the body. With a simple structure, this fitting makes it possible to displace the spacer in the direction of the axis while securing sealing performance between the spacer and the body.

## Claims

1. A fitting (10, 10A) to which a tube (62) is to be connected, the fitting comprising a chuck (12, 12A), a body (24, 24A), and a sleeve (44, 44A),
wherein the chuck accommodated in the sleeve includes an engaging piece (18, 18A) provided with a claw portion (18c, 74) configured to be locked to an outer surface of the tube,
the sleeve disposed outside the chuck is rotatable relative to the body between a first rotational position and a second rotational position,
the fitting comprises:
a guide mechanism (46, 46A) configured to guide the engaging piece in a manner so that a distance from the engaging piece to an axis of the chuck changes in accordance with rotation of the sleeve;
a rotation locking mechanism (40, 42, 48, 68, 102, 118) configured to restrict the rotation of the sleeve at the first rotational position and the second rotational position; and
a lock release mechanism (54, 64) configured to, due to the tube being inserted to a predetermined position, release restriction on the rotation of the sleeve located at the first rotational position, and
the claw portion does not contact the tube when the sleeve is located at the first rotational position, and the claw portion is locked to the outer surface of the tube when the sleeve is located at the second rotational position.

2. The fitting according to claim 1, wherein
the sleeve includes a cam portion (46, 46A) configured to guide the engaging piece in a radial direction of the chuck, and the guide mechanism includes the cam portion.

3. The fitting according to claim 2, wherein
the cam portion includes a first portion (46a, 122) that is closest to an axis of the sleeve, and a second portion (46b, 124) that is connected to the first portion and is gradually separated from the axis of the sleeve, and
when the sleeve is located at the second rotational position, the engaging piece locks the tube by being pressed toward the axis of the sleeve by the first portion of the cam portion.

4. The fitting according to claim 2, wherein the cam portion includes a cam groove (46a, 46b, 46c, 120) with which at least a part of the engaging piece engages.

5. The fitting according to any one of claims 1 to 4, wherein
the rotation locking mechanism includes a fixing claw (48) of the sleeve, a first fixing groove (40) of the body, and a second fixing groove (42) of the body.

6. The fitting according to claim 5, wherein
the lock release mechanism includes a C-ring (54) disposed between the body and the sleeve, and the C-ring includes a first protruding portion (56) configured to abut against a distal end of the tube, and a second protruding portion (58) configured to abut against the fixing claw.

7. The fitting according to claim 6, wherein
the body includes a hole portion (26, 26A) penetrating the body along a direction of an axis of the body, and a lateral hole (28) penetrating a wall surface of the body and communicating with the hole portion, and the first protruding portion of the C-ring is inserted through the lateral hole.

8. The fitting according to claim 6, wherein
the chuck, the body, the sleeve, and the C-ring are all made of resin.

9. The fitting according to any one of claims 1 to 4, wherein
the sleeve includes a display window (52) configured to allow an internal space of the sleeve to be visually recognized.

10. The fitting according to any one of claims 1 to 4, further comprising
a spacer (64) attached to the body so as to be displaceable in a direction of an axis of the body and configured to receive a distal end of the tube, wherein
the rotation locking mechanism includes:
a rotation locking protrusion (102) provided on the spacer and protruding outward from the spacer; and
a lock groove (118) provided on the sleeve and configured to engage with the rotation locking protrusion.

11. The fitting according to claim 10, further comprising
a guide (66) fixed to the body, configured to support the chuck in a manner so that the chuck is displaceable in a radial direction of the chuck, and configured to accommodate the spacer, wherein
the sleeve is rotatably attached to the body via the guide so as to accommodate the guide and the chuck.

12. The fitting according to claim 11, further comprising
a cushion (68) having a cylindrical shape and configured to seal a gap between the spacer and the body, wherein
the cushion includes a first annular groove (68a) formed at a first end portion of the cushion in the direction of the axis of the body, and a second annular groove (68b) formed at a second end portion of the cushion in the direction of the axis of the body.
